# FASCICULE DE BREVET EUROPEEN

(11) **EP 3 482 866 B1**
(45) Date de publication et mention de la délivrance du brevet: **23.11.2022**
(21) Numéro de dépôt: 18200614.8
(22) Date de dépôt: 16.10.2018
(51) Int. Cl.: B23K 26/00, B23K 26/12, B23K 26/21, B23K 26/035, H01M 8/0256, B23K 26/34, B23K 101/38, B23K 103/00, H01M 8/1018

(54) **PROCÉDÉ UTILISANT UN LASER POUR LE SOUDAGE ENTRE DEUX MATÉRIAUX MÉTALLIQUES OU POUR LE FRITTAGE DE POUDRE(S), APPLICATION À LA RÉALISATION DE PLAQUES BIPOLAIRES POUR PILES PEMFC**
VERFAHREN, DAS EINEN LASER ZUM VERSCHWEISSEN VON ZWEI METALLMATERIALEN ODER ZUM SINTERN VON PULVER(N) VERWENDET, ANWENDUNG ZUR HERSTELLUNG VON BIPOLARPLATTEN FÜR PEMFC-BRENNSTOFFZELLEN
METHOD USING A LASER FOR WELDING BETWEEN TWO METALLIC MATERIALS OR FOR SINTERING OF POWDER(S), APPLICATION TO THE PRODUCTION OF BIPOLAR PLATES FOR PEMFC CELLS

(30) Priorité: 08.11.2017 FR 1760478
(43) Date de publication de la demande: 15.05.2019
(73) Titulaire: COMMISSARIAT À L'ÉNERGIE ATOMIQUE ET AUX ÉNERGIES ALTERNATIVES, 75015 Paris (FR)
(72) Inventeur: ROUILLON, Ludovic, 38250 VILLARD DE LANS (FR)
(74) Mandataire: Nony

(56) Documents cités:
- WO-A1-03/096457
- WO-A2-2005/120764
- CN-B- 104 785 780
- DE-A1-102010 021 982
- FR-A1- 2 884 448
- FR-A1- 3 010 339
- FR-B1- 2 884 448
- JP-A- 2000 336 403
- US-A1- 2010 270 275
- US-A1- 2012 248 076
- US-A1- 2015 158 116
- US-A1- 2016 207 146

## Description

### Domaine technique

La présente invention concerne le domaine du soudage entre matériaux métalliques au moyen d'un laser.

L'invention vise notamment à faciliter le soudage entre pièces métalliques qui doit se faire selon des trajectoires complexes et en outre à éviter l'oxydation des lignes/point de soudure.

Une application principale visée concerne la soudure de plaques métalliques ondulées ou nervurées au niveau des ou sommets des ondulations isthmes, les ondulations ou nervures des plaques une fois soudées délimitant intérieurement des canaux de circulation de fluides étanches. Il peut s'agir de plaques dites bipolaires entrant dans la constitution d'un empilement de piles à combustible ou électrolyseurs à haute température, typiquement les piles à membrane échangeuse de protons (en anglo-saxon « *Proton Exchange Membrane Fuel Cell* » d'acronyme PEMFC).

Bien que décrite en référence à cette application principale, et plus particulièrement à l'application PEMFC, l'invention s'applique à tout type d'application dans laquelle un laser de puissance est mis en œuvre pour chauffer voire pour faire fusionner localement une ou plusieurs matières métalliques, en vue de créer une continuité de matière à assembler.

### Etat de la technique

Une pile à combustible à membrane échangeuse de protons PEMFC est un dispositif électrochimique qui convertit de l'énergie chimique directement en énergie électrique par réaction catalytique de l'hydrogène et de l'oxygène. Une pile à combustible PEMFC comprend un empilement en série de plusieurs cellules. Chaque cellule génère une tension typiquement de l'ordre de 0,7 Volt et leur empilement permet de générer une tension d'alimentation d'un niveau plus élevé, par exemple de l'ordre d'une centaine de volts.

Plus particulièrement, une pile à combustible PEMFC comprend des cellules unitaires ou motifs élémentaires contenant chacun un assemblage membrane-électrodes ou AME, qui constitue le cœur électrochimique de la pile. Chaque assemblage AME est constitué d'une membrane polymère électrolytique permettant le passage sélectif des protons et, de part et d'autre de cette membrane, des couches catalytiques qui forment l'anode et la cathode.

La membrane permet donc de séparer les compartiments anodique et cathodique. Les couches catalytiques sont généralement constituées de nanoparticules de platine supportées sur des agrégats de carbone.

Des couches de diffusion gazeuse (tissu de carbone, feutre...) ou GDL (de l'acronyme anglo-saxon " *Gaz Diffusion Layer*"), classiquement en fibres de graphite (tissu de carbone, feutre...) sont disposées de part et d'autre de l'AME pour assurer la conduction électrique, l'arrivée homogène des gaz réactifs et l'évacuation de l'eau produite.

A l'anode, la décomposition de l'hydrogène adsorbé sur le catalyseur produit des protons H⁺ et des élections e⁻ selon l'équation :

H₂ →2H⁺ + 2e⁻

Les protons traversent ensuite la membrane polymère avant de réagir avec l'oxygène à la cathode. La réaction des protons avec l'oxygène à la cathode conduit à la formation d'eau et à la production de chaleur selon l'équation

O₂ + 4H⁺ + 4e⁻ → 2H₂O

Comme déjà dit, une PEMFC peut comprendre un empilement de motifs élémentaires, et donc plusieurs AME disposés entre deux plaques qui doivent assurer le passage du courant et l'écoulement des gaz. Dans un tel empilement, deux motifs élémentaires adjacents sont généralement séparés par une même plaque, dont l'une des faces est au contact du compartiment cathodique d'un premier AME et l'autre face est au contact du compartiment anodique d'un deuxième AME, plus exactement au contact des couches de diffusion gazeuse. Pour cette raison, les plaques des PEMFC sont généralement appelées " plaques bipolaires ".

Ainsi, une plaque bipolaire assure plusieurs fonctions, parmi lesquelles:
- le transport du courant électrique collecté et la connexion électrique entre les différents motifs élémentaires ;
- la distribution des gaz (H₂, O₂ ou air) et l'évacuation de l'eau formée à la cathode, via des canaux et/ou orifices ménagés en son sein ;
- la séparation étanche entre l'anode et la cathode,
- la régulation thermique des cellules par le passage en leur sein d'un liquide de refroidissement,
- la collecte des électrons générés au niveau des anodes des différentes cellules unitaires,
- le support mécanique pour assurer la tenue de l'AME.

Concrètement, pour des raisons de coûts, d'encombrement et de performances, ces fonctions se traduisent par le fait qu'une plaque bipolaire pour PEMFC est généralement réalisée en métal.

Plus précisément, une plaque bipolaire est généralement constituée de deux plaques ou tôles métalliques fines, mises en forme, puis solidarisées par un moyen tel que la soudure ou le collage.

Lors de l'étape de soudage ou de collage, il est nécessaire de maintenir avec une certaine pression le contact entre ces deux tôles et dans le cas de soudure, de limiter par inertage l'oxydation qui pourrait se produire au niveau des jonctions soudées.

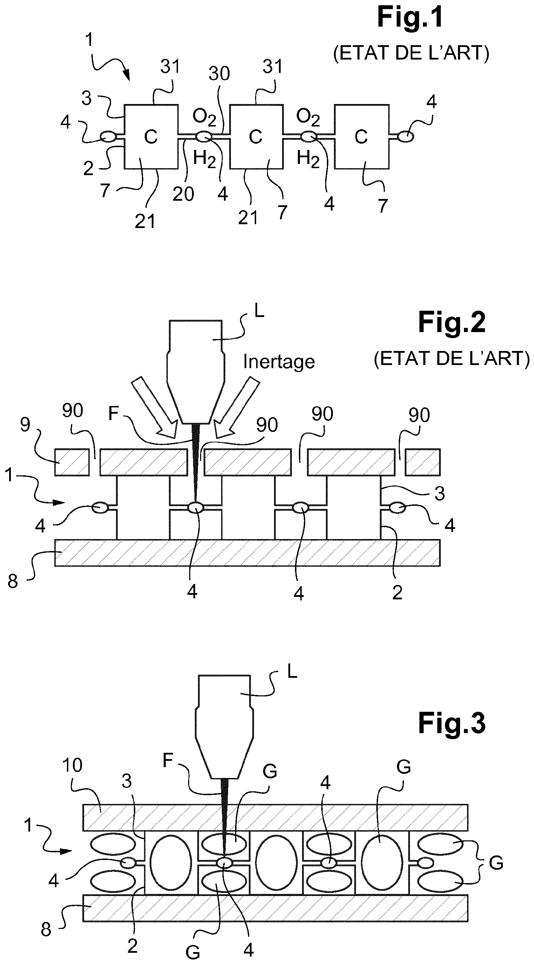

On a représenté en figure 1, une telle plaque bipolaire 1 constituée de deux plaques métalliques 2, 3 identiques qui sont mises en forme avec des rainures respectivement 20,30; 21, 31.

Ces plaques 2, 3 sont assemblées entre elles par des jonctions 4. L'assemblage réalisé délimite par les rainures 20, 30 des canaux de circulation 5, 6 respectivement d'hydrogène H2 et d'oxygène O2 tandis que les rainures 21, 31 délimitent intérieurement des canaux de circulation 7 de fluide caloporteur C.

Le soudage au laser est considéré comme la méthode la plus rentable pour assurer l'assemblage des deux plaques fines/tôles d'une plaque bipolaire pour pile à combustible: [1].

La soudure de ces tôles se fait par recouvrement si l'accostage est bien maitrisé : [2]. Le brevet US5096518 décrit également la nécessité d'un tel accostage.

En maitrisant l'accostage, le faisceau d'un laser de puissance permet la fusion des surfaces de contact métal sur métal sans perforer l'une ou l'autre des plaques.

L'accostage de ces plaques peut se faire de différentes manières : des plaques de pression externe sont couramment utilisées pour former en quelque sorte un étau de part et d'autre des tôles, ou une dépression est générée pour serrer les tôles ensemble et les maintenir physiquement.

On a représenté en figure 2, un soudage au laser L avec accostage des tôles 2, 3 au moyen de plaques de pression 8, 9.

La plaque 8 du dessous sert de socle sur laquelle les tôles 2, 3 à assembler sont positionnées.

La plaque 9 du dessus vient prendre en sandwich les tôles 2, 3 avec une pression pour maintenir un effort de contact entre les surfaces des tôles au niveau où les jonctions 4 doivent être réalisées.

Comme visible sur cette figure 2, la plaque 9 est ajourée d'une multitude d'ouvertures débouchantes 90 pour permettre l'accès du faisceau F du laser L afin d'assurer un cordon de soudure continu ou ponctuel dans les zones de jonction 4 recherchées. Ces zones peuvent être complexes par leurs formes et/ou leurs accessibilités. Il peut s'agir par exemple, de zones entre les canaux 5, 6, 7, sur le pourtour des lumières d'alimentation en gaz, sur le pourtour extérieur des tôles 2, 3....

Cette méthode de soudage utilisant une plaque de pression 9 pour maintenir le contact métal-métal présente plusieurs inconvénients.

Tout d'abord, il est par définition nécessaire de réaliser une plaque de pression avec une multitude d'ouvertures débouchantes.

L'épaisseur de cette plaque de pression étant limitée par la distance focale de l'équipement laser, ces ouvertures peuvent générer une inhomogénéité de contrainte de compression et peuvent, suivant le cas, typiquement pour des plaques bipolaires de grande surface, aboutir localement à une force insuffisante pour maintenir en contact, lors du soudage, les deux tôles à assembler.

En outre, ces ouvertures devant être de dimensions le plus réduites possibles, il est difficile de limiter l'oxydation par inertage. En effet, en pratique le système d'inertage qui envoie le gaz d'inertage à travers les ouvertures de la plaque de pression, comme montré par les flèches en figure 2, est classiquement embarqué sur la buse qui supporte le laser de soudage. De ce fait, il est très difficile d'inerter la zone soudée par le faible accès des gaz au travers des ouvertures.

Les ouvertures réalisées dans la plaque de pression augmentent le coût de fabrication de l'équipement de soudure et nécessitent des multiples conceptions pour répondre aux différentes géométries de plaque bipolaire et donc aux différentes zones complexes à souder.

Une alternative existante consiste à réaliser la soudure en plusieurs étapes avec un bridage plus localisé, c'est-à-dire une solution de maintien en contact localisé au niveau de chaque jonction à réaliser. Cette solution a pour inconvénient de nécessiter un arrêt du faisceau laser et une intervention pour changer de configuration et de plaque de pression pour souder toute la surface des tôles à assembler pour obtenir la plaque bipolaire souhaitée.

Le brevet US 7009136B2 propose une méthode de maintien du contact entre plaques/tôles par dépression. Ainsi, un vide partiel est créé entre les deux interfaces des plaques, dont le volume intérieur définit le circuit du liquide de refroidissement. Ce vide partiel permet d'attirer les deux plaques/tôles l'une vers l'autre au niveau de leurs surfaces de contact métal sur métal. Les plaques/tôles sont ensuite soudées entre elles au niveau de ces surfaces de contact au moyen d'un laser. Cette méthode apparaît intéressante, dans la mesure où elle supprime les inconvénients de la plaque de pression à multitude d'ouvertures débouchantes.

Cependant, en pratique, il est difficile de créer une dépression entre des plaques/tôles comportant de nombreux trous et de les raccorder à un système de dépression, sans mettre un système de bridage sur le pourtour et sur les lumières d'alimentation des plaques bipolaires.

De plus, après formage, on constate que les plaques/tôles métalliques contiennent de nombreuses contraintes mécaniques internes, qui génèrent une forte flèche de la plaque bipolaire dans sa zone centrale. Cette flèche importante s'avère difficile à éliminer par l'action uniquement d'une dépression.

Dans le cadre des piles à combustibles, les plaques bipolaires obtenues peuvent être avantageusement revêtues d'une poudre à fritter localement, tout comme les soudures envisagées sont locales. Ces poudres peuvent être métalliques ou céramiques. Par exemple, il peut être avantageux de déposer un revêtement pour protéger une plaque bipolaire de l'oxydation due à un joint particulier. De manière à être étanche, le revêtement doit être dense et donc avoir été fritté. Il peut être métallique, ou céramique (ZrO₂, Al2O₃).

Dans le domaine de frittage des poudres métalliques, il est connu d'utiliser un laser pour réaliser des pièces en trois dimensions (3D) à base de métal. L'impression 3D sur des couches successives de poudres métalliques est faite par laser. Dans le procédé, il est prévu un inertage avec de l'argon et/ou de l'azote, de l'intégralité de la chambre dans laquelle la ou les poudres sont frittées, et ce afin d'éviter de faire fondre les pièces au cours de leur fabrication. L'équipement est coûteux et pas nécessairement adapté à tous les types de pièces.

De ce qui précède, il ressort qu'il existe un besoin pour améliorer les solutions de réalisation de soudage de plaques bipolaires pour piles à combustible, notamment piles PEMFC, notamment afin de pallier les inconvénients des équipements de soudure par laser avec plaques de pression ou système de dépression existants.

De manière plus générale, il existe un besoin de proposer une solution de soudage pour réaliser des liaisons/jonctions métal-métal ou métal-céramique, qui soit simple à mettre en œuvre, efficace, de moindre coût et qui soit compatible avec un inertage.

Le but de l'invention est de répondre au moins en partie à ces besoins.

### Exposé de l'invention

Pour ce faire, l'invention concerne un procédé de soudage entre deux matériaux métalliques, comprenant les étapes suivantes :
a/ mise en place d'une plaque pleine, transparente à la (aux) longueur(s) d'onde d'émission d'un faisceau de laser, entre ledit laser et au moins une zone de contact entre les matériaux métalliques à souder, l'étape a2 étant réalisée avant l'étape a1 ci-dessous :
a1/ inertage de la(des) zone(s) de contact, l'inertage étant réalisé au moyen d'un gaz neutre, de préférence de l'argon et/ou de l'azote, le gaz d'inertage circulant dans les canaux délimités par les zones de contact entre plaques métalliques,
a2/ mise en pression des deux plaques métalliques pour les appliquer l'une contre l'autre dans la(les)s zone(s) de contact à souder, la pression d'application étant réalisée par la plaque transparente directement en contact avec l'une des deux plaques métalliques à souder,
b/ émission du faisceau laser, à travers la plaque transparente, pour réaliser le soudage des matériaux dans la(les) zone(s) de contact.

Ainsi, l'invention consiste essentiellement à faire passer le laser de soudage par une plaque non ajourée et transparente à la(aux) longueur(s) d'onde dudit laser, ce qui permet la transmission de son faisceau jusqu'à la(aux) zone(s) à souder.

Bien que simple à mettre en œuvre, personne n'avait pensé à réaliser une telle solution.

Cette plaque transparente peut permettre ainsi de créer aisément et à moindre coût un volume de confinement dans lequel on peut faire circuler un gaz d'inertage pour éviter l'oxydation des jonctions soudées.

Dans le cas de l'application à la soudure entre elles de tôles/plaques métalliques à ondulations et/ou nervures, en particulier dans le cas de la réalisation de plaques bipolaires pour piles à combustibles, les avantages de l'invention par rapport aux procédés existants sont nombreux parmi lesquels on peut citer :
- la suppression de l'usinage complexe d'une plaque de pression opaque pour réaliser la multitude d'ouvertures pour faire passer le faisceau laser vers chaque zone de contact à souder,
- l'obtention localement, près de la zone à souder, d'un état de contrainte optimisé pour favoriser le contact métal-métal,
- l'utilisation à souhait de la plaque transparente pour différentes géométries de plaques/tôles, sans être contraint par un chemin ou une géométrie de soudure.

Le procédé comprend avant l'étape b/, une étape a1/ d'inertage de la(des) zone(s) de contact, l'inertage étant réalisé au moyen d'un gaz neutre, de préférence de l'argon et/ou de l'azote.

De préférence, l'étape b/ est réalisée avec le faisceau laser sensiblement perpendiculaire à la plaque transparente.

De préférence encore, l'étape b/ est réalisée avec le faisceau laser sensiblement perpendiculaire à la (aux) zone(s) de contact à souder.

Le matériau constitutif de la plaque transparente mise en œuvre peut être avantageusement choisi parmi les matériaux suivants : verre, polymère, céramique transparente éventuellement dopé (oxyde de scandium dopé à ytterbium) pour limiter l'absorption.

Le procédé comprend en outre avant l'étape al/, une étape a2/ de mise en pression des deux plaques métalliques pour les appliquer l'une contre l'autre dans la(les)s zone(s) de contact à souder.

La pression d'application selon l'étape c/ peut être réalisée par la plaque transparente directement en contact avec l'une des deux plaques métalliques à souder.

Le gaz d'inertage circuledans les canaux délimités par les zones de contact entre plaques métalliques.

L'invention concerne également l'utilisation du procédé qui vient d'être décrit pour la réalisation de plaques bipolaires destinées aux piles à combustibles, en particulier des piles à membrane échangeuse de protons (PEMFC).

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique en coupe transversale d'une plaque bipolaire pour pile à combustible PEMFC avec les jonctions soudées,
- la figure 2 est une vue schématique en coupe transversale d'un équipement de soudure par laser selon l'état de l'art pour réaliser une plaque bipolaire selon la figure 1;
- la figure 3 est une vue schématique en coupe transversale d'un équipement de soudure par laser selon l'invention pour réaliser une plaque bipolaire selon la figure 1;
- la figure 4 est une vue schématique en coupe transversale d'un équipement de frittage par laser qui ne fait pas partie de l'invention pour réaliser un revêtement fritté sur la surface d'une plaque bipolaire selon la figure 3;
- la figure 5 est une vue schématique en coupe transversale d'un équipement de frittage par laser qui ne fait pas partie de l'invention pour réaliser une pièce métallique frittée.

Par souci de clarté, les mêmes références désignant les mêmes éléments d'un équipement de soudure et d'une plaque bipolaire de pile PEMFC selon l'état de l'art et selon l'invention sont utilisées pour toutes les figures 1 à 5.

On précise que les différents éléments selon état de l'art et selon l'invention sont représentés uniquement par souci de clarté et qu'ils ne sont pas à l'échelle.

Les termes de «dessus » et «dessous » se rapportant aux plaques de pression sont à considérer dans une configuration avec les plaques à souder à l'horizontal et le faisceau laser à la verticale.

Les figures 1 et 2 ont déjà été commentées en détail en préambule. Elles ne sont donc pas décrites ci-après.

On a représenté en figure 3, un soudage au laser L avec accostage de tôles 2, 3 à assembler entre elles au moyen de plaques de pression 8, 10.

La plaque 8 du dessous sert de socle sur laquelle les tôles 2, 3 à assembler sont positionnées.

La plaque pleine 10 du dessus vient prendre en sandwich les tôles 2, 3 avec une pression pour maintenir un effort de contact entre les surfaces des tôles au niveau où les jonctions 4 doivent être réalisées.

Comme visible sur cette figure 3, la plaque pleine 10 conforme à l'invention est transparente à la(aux) longueur(s) d'onde du laser de soudage L. Cette plaque pleine 10 n'a donc pas à être ajourée avec de multiples ouvertures bien définies contrairement à la plaque 9 selon l'état de l'art.

Ainsi, le faisceau F du laser L peut traverser la plaque 10 en tout point de celle-ci afin d'assurer un cordon de soudure continu ou ponctuel dans les zones de jonction 4 recherchées. Ces zones peuvent être complexes par leurs formes et/ou leurs accessibilités. Il peut s'agir par exemple, de zones entre les canaux 5, 6, 7, sur le pourtour des lumières d'alimentation en gaz, sur le pourtour extérieur des tôles 2, 3....

Avantageusement, lors du soudage, le faisceau F du laser L est orienté perpendiculaire à la plaque transparente 10 et à la zone soudée 4. Cela permet d'éviter d'avoir des contraintes de conception pour l'indice de réfraction du matériau à utiliser pour la plaque 10 afin d'éviter un changement de direction du faisceau F.

La plaque transparente 10 peut être verre, en polymère de type acrylique ou en céramique de type séliniure de Zinc (ZnSe). La céramique peut être dopée (oxyde de scandium dopé à l'ytterbium) pour limiter l'absorption du rayonnement du faisceau laser.

L'indice de réfraction de la plaque 10 est avantageusement de l'ordre de 1.

La plaque transparente 10 non ajourée, permet de définir avec la plaque 8 formant le socle un volume intérieur qu'il est aisé de rendre étanche. Ainsi, on peut remplir ce volume d'un gaz d'inertage G de type azote ou argon, comme montré sur la figure 3. Les zones soudées 4 se trouvent ainsi complètement immergées dans le gaz d'inertage G qui circule et est confiné, dans les canaux délimité par les plaques 2, 3 et 8, 10.

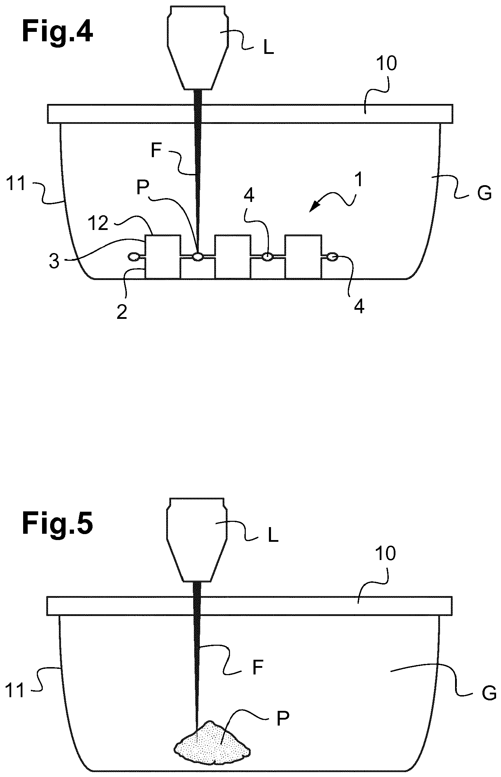

La figure 4 illustre un autre mode de réalisation qui ne fait pas partie de l'invention mettant en œuvre une plaque transparente et non ajourée 10.

La plaque 10 vient fermer un récipient 11 et ainsi formé un volume à l'intérieur duquel un gaz d'inertage G est injecté.

Le récipient 11 contient à la fois une plaque bipolaire 1 et une poudre métallique P déposée sur la surface de la plaque en vue d'obtenir un revêtement fritté 12.

Le faisceau F du laser L peut passer en tout point à travers la plaque transparente 10 et atteindre la poudre dans des zones très précises de la poudre à fritter et ainsi obtenir un revêtement fritté uniforme 12 sur la surface de plaque 1.

La figure 5 illustre un autre mode pour obtenir une pièce métallique frittée à partir d'un récipient analogue à celui de la figure 4 et d'une plaque transparente et non ajourée 10 qui ne fait pas partie de l'invention.

Le faisceau F du laser L peut passer en tout point à travers la plaque transparente 10 et atteindre la poudre P dans des zones très précises de la poudre à fritter et ce afin d'obtenir une pièce métallique selon une forme souhaitée.

D'autres variantes et avantages de l'invention peuvent être réalisés sans pour autant sortir du cadre de l'invention.

Par exemple, si dans la réalisation de soudage pour obtenir une plaque bipolaire, la plaque transparente aux longueurs d'onde du laser, sert également de plaque de pression pour maintenir en contact les deux plaques métalliques dans les zones à souder, on peut très bien envisager que la plaque transparente n'est pas cette fonction de mise en pression et que celle-ci soit mise en œuvre par d'autres moyens.

L'invention n'est pas limitée aux exemples qui viennent d'être décrits ; on peut notamment combiner entre elles des caractéristiques des exemples illustrés au sein de variantes non illustrées.

### REFERENCES CITEES

[1] : Marcinkoski J, James BD, Kalinoski JA, Podolski W, Benjamin T, Kopasz J. « Manufacturing process assumptions, used in fuel cell system cost analyses. » J Power Sources 196 2011_5282-5292
[2] : Cazes, « Soudage par faisceaux à haute énergie : faisceau d'électrons et laser. » Techniques de l'Ingénieur 1994_B7_740

## Revendications

1. Procédé de soudage entre deux matériaux métalliques (2, 3), comprenant les étapes suivantes :
a/ mise en place d'une plaque pleine (10), transparente à la (aux) longueur(s) d'onde d'émission d'un faisceau de laser (F), entre ledit laser (L) et au moins une zone de contact (4) entre les matériaux métalliques à souder, l'étape a2 étant réalisée avant l'étape a1 ci-dessous :
a1/ inertage de la(des) zone(s) de contact, l'inertage étant réalisé au moyen d'un gaz neutre, de préférence de l'argon et/ou de l'azote, le gaz d'inertage circulant dans les canaux délimités par les zones de contact entre plaques métalliques,
a2/ mise en pression des deux plaques métalliques pour les appliquer l'une contre l'autre dans la(les)s zone(s) de contact à souder, la pression d'application étant réalisée par la plaque transparente directement en contact avec l'une des deux plaques métalliques à souder.
b/ émission du faisceau laser, à travers la plaque transparente, pour réaliser le soudage des matériaux dans la(les) zone(s) de contact.

2. Procédé selon la revendication précédente, l'étape b/ étant réalisée avec le faisceau laser sensiblement perpendiculaire à la plaque transparente.

3. Procédé selon l'une des revendications précédentes, l'étape b/ étant réalisée avec le faisceau laser sensiblement perpendiculaire à la (aux) zone(s) de contact à souder.

4. Procédé selon l'une des revendications précédentes, le matériau constitutif de la plaque transparente mise en œuvre étant choisi parmi les matériaux suivants : verre, polymère, céramique transparente éventuellement dopé (oxyde de scandium dopé à ytterbium) pour limiter l'absorption.

5. Utilisation du procédé selon l'une des revendications 1 à 4 pour la réalisation de plaques bipolaires destinées aux piles à combustibles, en particulier des piles à membrane échangeuse de protons.

## Patentansprüche

1. Verfahren zum Schweißen zwischen zwei metallischen Werkstoffen (2, 3), umfassend die folgenden Schritte:
a/ Einrichten einer durchgehenden Platte (10), die für die Emissionswellenlänge(n) eines Laserstrahls (F) transparent ist, zwischen dem Laser (L) und mindestens einer Kontaktzone (4) zwischen den zu schweißenden metallischen Werkstoffen, wobei der Schritt a2 vor dem untenstehenden Schritt a1 ausgeführt wird:
a1/ Inertisierung der Kontaktzone(n), wobei die Inertisierung mittels eines neutralen Gases, bevorzugt Argon und/oder Stickstoff, ausgeführt wird, wobei das Inertisierungsgas zwischen den durch die Kontaktzonen zwischen Metallplatten begrenzten Kanälen zirkuliert,
a2/ Druckbeaufschlagen der beiden Metallplatten, um sie in der(den) zu schweißenden Kontaktzone(n) aneinander anzulegen, wobei der Anlegedruck von der transparenten Platte ausgeführt wird, die direkt in Kontakt mit der einen der beiden zu schweißenden Metallplatten ist,
b/ Emittieren des Laserstrahls, durch die transparente Platte hindurch, um das Schweißen der Werkstoffe in der(den) Kontaktzone(n) auszuführen.

2. Verfahren nach dem vorhergehenden Anspruch, wobei der Schritt b/ mit dem im Wesentlichen senkrecht zu der transparenten Platte verlaufenden Laserstrahl ausgeführt wird.

3. Verfahren nach einem der vorhergehenden Ansprüche, wobei der Schritt b/ mit dem im Wesentlichen senkrecht zu der(den) zu schweißenden Kontaktzone(n) verlaufenden Laserstrahl ausgeführt wird.

4. Verfahren nach einem der vorhergehenden Ansprüche, wobei der Werkstoff, aus dem die eingesetzte transparente Platte besteht, unter den folgenden Werkstoffen gewählt wird: Glas, Polymer, transparente Keramik, gegebenenfalls dotiert (mit Ytterbium dotiertes Scandiumoxid), um die Absorption zu begrenzen.

5. Verwendung des Verfahrens nach einem der Ansprüche 1 bis 4 zur Ausführung von Bipolarplatten, die für Brennstoffzellen, insbesondere Protonenaustauschmembran-Brennstoffzellen, bestimmt sind.

## Claims

1. Method of welding between two metallic materials (2, 3), comprising the following steps:
a/ fitting a solid plate (10), transparent at the emission wavelength(s) of a laser beam (F), between said laser (L) and at least one contact zone (4) between the metallic materials to be welded, step a2 being carried out before step a1 below:
a1/ inerting of the contact zone(s), inerting being carried out by means of a neutral gas, preferably argon and/or nitrogen, with the inerting gas circulating in the channels delimited by the contact zones between metal plates,
a2/ exerting pressure on the two metal plates so as to apply them against one another in the contact zone(s) to be welded, the application pressure being exerted by the transparent plate directly in contact with one of the two metal plates to be welded,
b/ emission of the laser beam, through the transparent plate, so as to carry out welding of the materials in the contact zone(s).

2. Method according to the preceding claim, step b/ being carried out with the laser beam substantially perpendicular to the transparent plate.

3. Method according to one of the preceding claims, step b/ being carried out with the laser beam substantially perpendicular to the contact zone(s) to be welded.

4. Method according to one of the preceding claims, the constituent material of the transparent plate employed being selected from the following materials: glass, polymer, transparent ceramic optionally doped (ytterbium-doped scandium oxide) to limit the absorption.

5. Use of the method according to one of Claims 1 to 4 for the production of bipolar plates intended for fuel cells, in particular proton-exchange membrane fuel cells.
